(19) **Europäisches Patentamt**

**European Patent Office**

**Office européen des brevets**

(11) **EP 0 749 070 B1**

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(51) Int Cl.⁷: **H04L 12/10**, G06F 13/40, H04L 12/40

(21) Anmeldenummer: **95120529.3**

(22) Anmeldetag: **27.12.1995**

(54) **Verfahren zum dezentralen Speisen eines Busses und Anordnung zum Durchführen des Verfahrens**

Method for decentralised supply of a bus and apparatus for carrying out the method

Méthode d'alimentation décentralisé de bus et appareil de mise en oeuvre de la méthode

(84) Benannte Vertragsstaaten:
**AT BE CH DE DK FR GB LI NL**
Benannte Erstreckungsstaaten:
**LT LV**

(30) Priorität: **12.06.1995 CH 173495**

(43) Veröffentlichungstag der Anmeldung:
**18.12.1996 Patentblatt 1996/51**

(73) Patentinhaber: **Siemens Building Technologies AG**
**6300 Zug (CH)**

(72) Erfinder:
• **Kyburz, Beat**
**CH-6030 Ebikon (CH)**
• **Burri, Peter**
**CH-6005 Luzern (CH)**

• **Buck, Martin**
**CH-6010 Kriens (CH)**
• **Geisseler, Peter**
**CH-6033 Buchrain (CH)**

(74) Vertreter: **Berg, Peter, Dipl.-Ing. et al**
**European Patent Attorney,**
**Siemens AG,**
**Postfach 22 16 34**
**80506 München (DE)**

(56) Entgegenhaltungen:
**EP-A- 0 612 016          EP-A- 0 632 392**
**WO-A-93/20520          DE-A- 4 315 674**

• **PATENT ABSTRACTS OF JAPAN vol. 9, no. 27 (E-294), 6.Februar 1985 & JP 59 171347 A (MITSUBISHI DENKI KK), 27.September 1984,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum dezentralen Speisen eines Busses und auf eine Anordnung zum Durchführen des Verfahrens gemäss dem Oberbegriff des Anspruchs 1 bzw. 11.

Das Verfahren und die Anordnung wird vorzugsweise in Gebäude-Automationssystemen verwendet wie z. B. Heizungs- und Klimaanlagen. Der Bus ist vorzugsweise ein einfacher Prozessbus, der primär dem lokalen Prozessdaten-Austausch dient, wie z. B. ein kostengünstiges sogenanntes LAN ("Local Area Network"). Der Bus kann für die physikalische Schicht ("Physical Layer") im wesentlichen die Spezifikationen des sogenannten BatiBUS verwenden gemäss Norm NF C 46 621. Die physikalische Schicht ist dabei die Schicht 1 ("Layer 1") des OSI-Referenzmodells gemäss ISO-Standard 7498.

Bekannt sind dezentral gespeiste Busse, bei denen jeder Busteilnehmer fest entweder ein speisender oder ein nichtspeisender Busteilnehmer ist. Bekannt sind ausserdem zentral gespeiste Busse, wie z. B. der sogenannte BatiBUS, bei denen die Bus-Speisung ausschliesslich ab einer zentralen Speisung erfolgt, während die anderen Busteilnehmer alle ohne Ausnahme nichtspeisende Busteilnehmer sind.

Der Erfindung liegt die Aufgabe zugrunde, ein Verfahren und eine Anordnung der eingangs genannten Art zu verwirklichen, welche verhindern, dass ein Überstrom über den Bus fliesst, wenn viele Busteilnehmer am Bus angeschlossen sind, welche alle einen Strom $I_{BT,Max}$ zum gesamten Busstrom beitragen können, wobei $I_{BT,Max}$ einen maximalen Strom bezeichnet, den ein Busteilnehmer bei eingeschalteter eigener Busspeisung auf den Bus geben kann.

Das erfindungsgemässe Verfahren und die erfindungsgemässe Anordnung hat somit folgende Vorteile:

- Einerseits verhindern sie, dass die Busteilnehmer in einem Bus-System ohne zentrale Speisung gesamthaft mehr Busstrom in den Bus einspeisen als eine erlaubte Obergrenze $I_{Bus,\,Max} + I_H$. Erfindungsgemäss schaltet eine richtige Anzahl Busteilnehmer $N_{BT,Ein}$ automatisch ihre eigene Bus-Speisung ein, während die anderen Busteilnehmer ($N_{BT,Aus}$) ihre eigene Bus-Speisung ausschalten und somit keinen Beitrag zum gesamten Busstrom leisten. Es wird somit verhindert, dass:

$$N_{BT,Ein} \cdot I_{BT,Max} > I_{Bus,Max} + I_H.$$

- Andererseits bewirken das erfindungsgemässe Verfahren und die erfindungsgemässe Anordnung, dass in einem Bus-System mit zentraler Speisung alle anderen Busteilnehmer ohne Ausnahme automatisch ihre eigene Bus-Speisung ausschalten.

Die genannte Aufgabe wird erfindungsgemäss durch die im Kennzeichen des Anspruchs 1 bzw. 11 angegebenen Merkmale gelöst. Vorteilhafte Ausgestaltungen der Erfindung ergeben sich aus den abhängigen Ansprüchen.

Die Erfindung weist ausserdem noch folgende weitere Vorteile auf:

- Eine zentrale Bus-Speisung kann möglicherweise eingespart werden und/oder ist nur fakultativ vorhanden
- Die Busteilnehmer funktionieren in verschiedensten Systemumgebungen, was eine grosse Kompatibilität und unter anderem folgende Möglichkeiten ergibt:

    - Ein und dieselben Busteilnehmer können mit 100%-iger Kompatibilität auch in einem System mit zentraler Bus-Speisung eingesetzt werden, z. B. in einem BatiBUS-System.
    - Auch in einem dezentral gespeisten System darf es Busteilnehmer geben, die keine eigene Bus-Speisung besitzen, wie z. B. speisungslose reine BatisBUS-Geräte oder Geräte mit einem galvanisch getrennten Busanschluss. Auch in einem dezentral gespeisten System darf es Busteilnehmer geben, die ihren Leistungsbedarf ausschliesslich vom Bus beziehen, z. B. einfache BatiBUS-Geräte ohne Anschluss an ein öffentliches Energieversorgungsnetz.

Das erfindungsgemässe Verfahren und die erfindungsgemässe Anordnung ermöglichen somit einem Busteilnehmer sowohl an einem Bus mit zentraler Bus-Speisung zu arbeiten, z. B. mit 100%-tiger Kompatibilität zu einem BatiBUS-System, als auch mit einem dezentral gespeisten Bus zu funktionieren, wobei dann ein eine erfindungsgemässe Anordnung aufweisender Busteilnehmer automatisch erkennt, welche der beiden Speisungsvarianten vorliegt.

Ein Ausführungsbeispiel der Erfindung ist in der Zeichnung dargestellt und wird im folgenden näher beschrieben.

Es zeigen:

Fig. 1    ein prinzipielles Blockschaltbild eines erfindungsgemässen Systems und

Fig. 2    ein prinzipielles Blockschaltbild eines erfindungsgemässen Busteilnehmers.

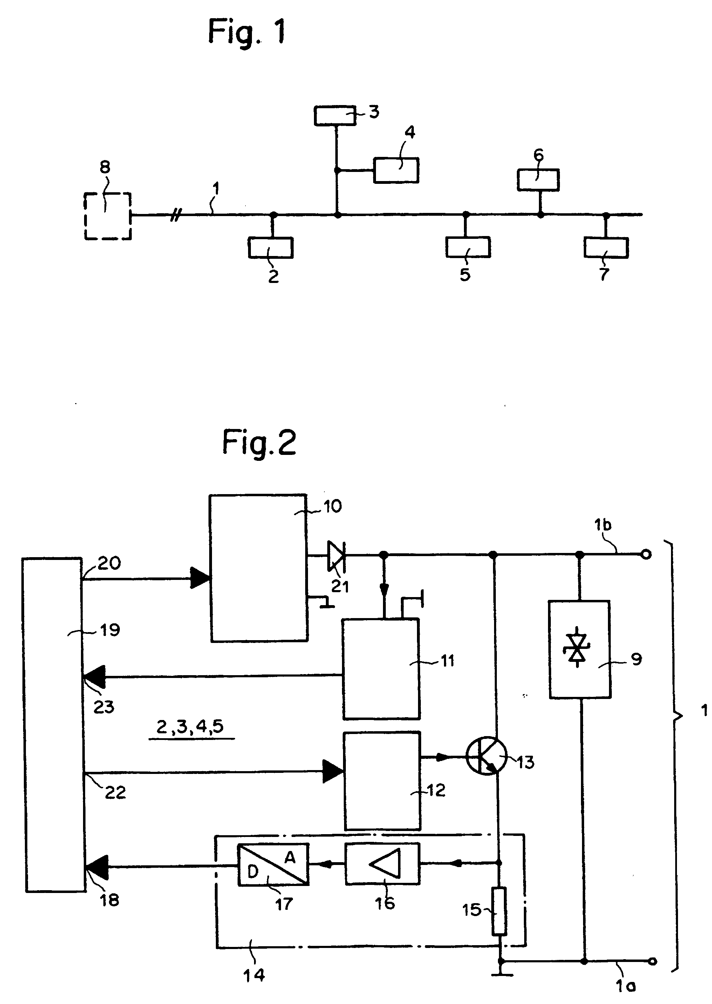

Gemäss Fig. 1 sind an einem Bus 1, in der Regel räumlich verteilt, mehrere Busteilnehmer 2, 3, 4, 5, 6 und 7 sowie fakultativ (daher gestrichelt dargestellt) eine zentrale Bus-Speisung 8 angeschlossen. Ein Busteilnehmer ist dabei jeweils ein an dem gemeinsamen Bus 1 angeschlossenes Gerät, welches fähig ist einerseits eigene Informationen über den Bus 1 zu anderen Busteilnehmern zu senden und andererseits Informationen zu empfangen, die von anderen Busteilnehmern über den Bus 1 gesendet werden. Mindestens ein Teil der Busteilnehmer, z. B. die Busteilnehmer 2 bis 5 enthalten eine erfindungsgemässe Anordnung, während die anderen Busteilnehmer 6 und 7 bereits existierende Geräte, z. B. BatiBUS-Geräte, ohne eigene Bus-Speisung sind. Der Bus besteht vorzugsweise, was nachfolgend angenommen wird, aus einem Leiterpaar, wovon ein Leiter 1a an Masse liegt.

Die Busteilnemer 2 bis 5 sind vorzugsweise identisch und z. B. gemäss Fig. 2 aufgebaut. Sie weisen dann jeweils eine Schutzschaltung 9, eine ein- und abschaltbare Bus-Speisung 10, einen Empfänger 11, einen Sender 12 mit einem Ausgangstransistor 13 und eine Strom-Messeinrichtung 14 auf. Die letztere enthält vorzugsweise einen niederohmigen Shunt-Widerstand 15, dessen erster Anschluss an Masse liegt und dessen zweiter Anschluss über einen Verstärker 16 und einen diesen nachgeschalteten Analog/Digital-Wandler 17 mit einem Ausgang der Strom-Messeinrichtung 14 verbunden ist. Der letztere ist auf einen ersten Eingang 18 einer Entscheidungs-Einrichtung 19 geführt, die vorzugsweise ein Mikrocomputer ist und deren erster Ausgang 20 mit einem Steuereingang der Bus-Speisung 10 verbunden ist zwecks Ein- und Abschaltung derselben. Die letztere ist jeweils eine lokale, also dezentrale Bus-Speisung. Ihr zweipoliger Ausgang ist über eine Rückfluss-Sperrdiode 21 mit dem Bus 1 verbunden, an dem zweipolig auch die Schutzschaltung 9 angeschlossen ist. Die letztere enthält z. B. zwei in Reihe geschaltete und in umgekehrter Richtung gepolte Zenerdioden, deren Reihenschaltung ein Kondensator parallel geschaltet ist (nicht dargestellt). Ein zweiter Ausgang 22 der Entscheidungs-Einrichtung 19 ist auf einen Eingang des Senders 12 geführt, dessen Ausgang mit der Basis des Transistors 13 verbunden ist. Der letztere ist z. B ein NPN-Bipolartransistor, der als Schalttransistor arbeitet und dessen Kollektor mit einem nicht an Masse liegenden Leiter 1b des Busses 1 verbunden ist, während sein Emitter über den Shunt-Widerstand 15 an Masse liegt. Ein zweipoliger hochohmiger Eingang des Empfängers 11 ist am Bus 1 angeschlossen, während sein Ausgang mit einem zweiten Eingang 23 der Entscheidungs-Einrichtung 19 verbunden ist.

Die erfindungsgemässe Anordnung ermöglicht einerseits eine intelligente dezentrale Stromspeisung des Busses 1 durch die Busteilnehmer 2 bis 5 und ermöglicht dadurch einen jeden Busteilnehmer 2 bis 7 an dem auf diese Weise gespeisten Bus 1 zu arbeiten. Anderseits kann der Bus 1 auch von der zentralen Bus-Speisung 8 allein gespeist werden, wobei dann die Busteilnehmer 2 bis 5 ohne Ausnahme automatisch ihre eigene Bus-Speisung ausschalten. Im erfindungsgemässen Verfahren entscheidet der Teil 2 bis 5 der Busteilnehmer 2 bis 7 selber, ob in Abhängigkeit einer auf dem Bus vorhandenen Stromsituation ihre eigene Bus-Speisung 10 den Bus 1 speist oder nicht speist. D. h.: Ohne zentrale Bus-Speisung 8 sind die Busanschlüsse gewisser Busteilnehmer 2 bis 5 speisende Busknotenpunkte, während die Anschlüsse aller anderen Busteilnehmer nichtspeisende Busknotenpunkte darstellen. Mit der zentralen Bus-Speisung 8 sind die Busanschlüsse aller Busteilnehmer 2 bis 7 ohne Ausnahme nichtspeisende Busknotenpunkte. Die nichtspeisenden Busteilnehmer können im Betrieb bis zu einem gewissen Mass vom Bus 1, d. h. entweder von dem Teil der Busteilnehmer 2 bis 5, welche ihre eigene Bus-Speisung eingeschaltet haben, oder von der zentralen Bus-Speisung 8 gespeist werden. Sie können sich aber auch passiv verhalten, d. h. sie speisen weder selber, noch werden sie von anderen gespeist. Gerätetechnisch ist die in den Busteilnehmern vorhandene dezentrale Bus-Speisung 10 jeweils so konstruiert, dass sie einerseits einen definierten Kurzschluss-Strom $I_{BT,Max}$ besitzt sowie andererseits ein- und abschaltbar ist, so dass der Busteilnehmer im letzteren Fall keinen Speisestrom liefert. Das Ein- oder Abschalten der dezentralen Bus-Speisung 10 ist dabei auch während einer Übertragung, d. h. inmitten eines Übertragungstelegramms möglich.

In der erfindungsgemässen Anordnung zur Durchführung des Verfahrens enthält mindestens ein Teil der Busteilnehmer, nämlich die Busteilnehmer 2 bis 5, jeweils die Entscheidungs-Einrichtung 19 zum eigenständigen Ein- oder Abschalten ihrer eigenen Bus-Speisung 10 in Abhängigkeit der auf dem Bus 1 vorhandenen Stromsituation. Die betreffenden Busteilnehmer 2 bis 5 enthalten auch jeweils die Strom-Messeinrichtung 14 zum jeweiligen Messen bei einem sendenden Busteilnehmer 2, 3, 4 oder 5 eines über den Bus 1 fliessenden Bus-Stromes. Beim Senden, d. h. wenn einer der Busteilnehmer 2, 3, 4 oder 5 die beiden Leitungen 1a und 1b des Busses 1 mittels des Transistors 13 annähernd kurzschliesst, erfolgt somit jeweils eine Messung des Bus-Stromes $I_{Bus}$. Die betreffenden Busteilnehmer 2 bis 5 weisen ausserdem eine Schalteinrichtung auf zum eigenständigen Ein/Ab-Schalten ihrer Bus-Speisung 10 in Abhängikeit eines von ihrer Entscheidungs-Einrichtung 19 am Ausgang 20 erzeugten Signals. Zu diesem Zweck ist der Ausgang der Strom-Messeinrichtung 14 über die Entscheidungs-Einrichtung 19 mit dem Steuereingang der Schalteinrichtung verbunden. Der betreffende Busteilnehmer muss selber entscheiden, ob er den Bus 1 speisen darf oder nicht. Dieser Entscheid hängt von der ermittelten Grösse des Bus-Stromes $I_{Bus}$ ab. Die betreffenden Busteilnehmer 2 bis 5 sind bezüglich ihrer Bus-Schnittstelle vorzugsweise identisch aufgebaut. Beim Senden werden, wie bereits erwähnt, im sendenden Busteilnehmer vorzugsweise die beiden Leiter 1a und 1b des Busses 1 annähernd, d. h. z. B. über den niederohmigen Shunt-Widerstand 15 der Strom-Messeinrichtung 14, kurzgeschlossen. Im Betrieb kann durch eine geeignete Vorgehensweise, z. B. durch Wahl eines geeigneten Mess-Zeitpunktes, vorausgesetzt werden, dass kein anderer Busteilnehmer gleichzeitig am Senden ist. Der niederohmige Shunt-Widerstand 15 des sendenden Busteilnehmers wird dann vom grössten Teil des Bus-Stromes $I_{Bus}$ durchflossen. Der letztere erzeugt in ihm einen proportionalen Spannungabfall, der ein Mass für den gerade fliessenden Bus-Strom $I_{Bus}$ ist. Der analoge Wert des Spannungsabfalls über den Shunt-Widerstand 15 wird dann in der Strom-Messeinrichtung 14 dem Analog/Digital-Wandler 17 zugeleitet zwecks Umwandlung in einen digitalen Strommesswert. Der letztere wird dann zwecks Auswertung der Entscheidungs-Einrichtung 19 zugeführt. In dem sendenden Busteilnehmer wird somit der Stromwert $I_{Bus}$ des über den Bus 1 fliessenden Stromes mittels der Strom-Messeinrichtung 14 ermittelt. Gewisse Busteilnehmer müssen den Bus 1 mit elektrischem Strom versorgen, wobei ein maximaler Strom $I_{BT,Max}$, welcher ein Busteilnehmer bei eingeschalteter eigener Bus-Speisung 10 auf den Bus 1 geben kann, begrenzt ist. Da ein solcher maximaler Strom $I_{BT,Max}$ mit Sicherheit dann fliesst, wenn irgendein Busteilnehmer im Sendebetrieb den Bus 1 annähernd kurzschliesst, muss die erfindungsgemässe Anordnung dafür sorgen, dass nicht einfach alle Busteilnehmer 2 bis 5 den Bus 1 mit Strom speisen, da ein definierter, maximal zulässiger Bus-Strom $I_{Bus, Max} + I_H$ nicht überschritten werden darf. Dazu wird die eigene Bus-Speisung 10 des sendenden Busteilnehmers, falls sie den Bus 1 speist, abgeschaltet, wenn der ermittelte Stromwert $I_{Bus}$ grösser als der obere Grenzwert $I_{BT,Max} + I_H$ des Bus-Stromes ist. Die eigene Bus-Speisung 10 des sendenden Busteilnehmers wird dagegen, zusätzlich zu den den Bus 1 bereits speisenden Bus-Speisungen anderer Busteilnehmer, auf den Bus geschaltet, falls sie den letzteren noch nicht speist, wenn der ermittelte Stromwert $I_{Bus}$ kleiner als ein unterer Grenzwert $I_{Bus,Max} - I_H$ des Bus-Stromes ist. Die Bus-Speisung 10 innerhalb des sendenden Busteilnehmers bleibt andererseits unverändert, wenn der ermittelte Stromwert $I_{Bus}$ zwischen dem oberen und unteren Grenzwert $I_{Bus,Max} + I_H$ und $I_{Bus,Max} - I_H$ liegt. Der obere Grenzwert $I_{Bus,Max} + I_H$ ist vorzugsweise ein um einen halben Hysteresewert $I_H$ erhöhter und der untere Grenzwert ein um den halben Hysteresewert $I_H$ erniedrigter maximaler Busstromwert $I_{Bus,Max}$. Dabei ist $2I_H$ der Hysteresewert eines in der Entscheidungs-Einrichtung 19 enthaltenen Komparators. Solange der ermittelte Stromwert $I_{Bus}$ grösser als der obere Grenzwert $I_{Bus,Max} + I_H$ ist, speisen somit die Bus-Speisungen 10 von zeitlich nachfolgend und zufällig sendenden Busteilnehmern eine nach der anderen den Bus 1 nicht mehr, d. h. werden eine nach der anderen abgeschaltet, bis dass der ermittelte Stromwert $I_{Bus}$ kleiner als der obere Grenzwert $I_{Bus,Max} + I_H$ wird. Die erfindungsgemässe Anordnung stellt so grundsätzlich sicher, dass der maximale Kurzschlussstrom des Busses 1 auch dann begrenzt bleibt, wenn sehr viele Busteilnehmer 2 bis 5 auf den Bus 1 wirksam sind, welche ja alle die Möglichkeit hätten, den Bus 1 dezentral zu speisen. Wenn der Kurzschluss-Strom $I_{BT,Max}$ der Bus-Speisung 10 eines Busteilnehmers grösser dem Hysteresewert $2I_H$ ist, können sich in einem Bus-System ohne zentrale Speisung wandernde Einspeise-Knotenpunkte auf dem Bus 1 mit steter Veränderung der sogenannten Buseinspeise-Topologie ergeben, da dann immer wieder andere Busteilnehmer die Aufgabe der dezentralen Bus-Speisung übernehmen, weil abwechslungsweise einmal bei einem Busteilnehmer die eine Ungleichheit,

$$\text{z. B. } I_{Bus} > I_{Bus,Max} + I_H,$$

und dann wieder bei einem anderen Busteilnehmer die andere Ungleichheit,

$$\text{z. B. } I_{Bus} < I_{Bus,Max} - I_H,$$

erfüllt sein kann. Diese Betriebsart kann nur dann auftreten, wenn eine minimale Anzahl $N_{BT,Min}$ Busteilnehmer 2 bis 5 auf den Bus wirksam sind, d. h. die folgende Ungleichheit erfüllt ist:

$$N_{BT,Min} \cdot I_{BT,Max} > I_{Bus,Max} + I_H$$

Alle logischen Verknüpfungen, d. h. alle Schlussfolgerungen aus den Ungleichheiten, werden vorzugsweise softwaremässig in der Entscheidungs-Einrichtung 19, also mittels des dort vorhandenen Mikrocomputers realisiert.

Ein jeder Busteilnehmer 2 bis 5 erkennt jeweils automatisch welche Speisungsvariante vorliegt, nämlich ob die zentrale oder eine dezentrale Bus-Speisung wirksam ist und den Bus 1 speist. Dies ist insofern wichtig, da der Busteilnehmer 2 bis 5 jeweils selber entscheiden muss, ob er den Bus 1 dezentral speisen muss oder nicht, d. h. ob die dezentrale Bus-Speisung durch ihn selber zu erfolgen hat oder nicht. Bei einer wirksamen zentralen Bus-Speisung 8 darf prinzipiell kein anderer Busteilnehmer den Bus 1 mit einem Strom speisen. Der geräteseitige Busanschluss der Busteilnehmer 2 bis 5 erfolgt für die beiden Speisungsvarianten (zentral/dezentral) über die gleichen zwei Klemmen.

Im Fall einer wirksamen zentralen Bus-Speisung bewirkt die erfindungsgemässe Anordnung, dass kein einziger Busteilnehmer 2 bis 5 den Bus 1 mit einem Bus-Strom speist. Zwingende Voraussetzung dafür ist, dass der obere Grenzwert $I_{Bus,Max} + I_H$ immer kleiner ist als der Strom $I_{Bus,Zentral}$, welcher die zentrale Bus-Speisung auf den Bus gibt, d. h.:

$$I_{Bus,Zentral} > I_{Bus,Max} + I_H.$$

In diesem Falle schalten alle Busteilnehmer 2 bis 5 ihre dezentrale Bus-Speisung 10 aus. Das Verhalten des Systems unterscheidet sich dann nicht mehr von einem System, welches ausschliesslich zentral gespeist ist. $I_{Bus,Zentral}$ beträgt z. B. 270 mA.

Anlässlich einer Inbetriebsetzung des Systems speist zu Beginn kein einziger Busteilnehmer 2 bis 5 den Bus 1 mit einem Bus-Strom, ausser gegebenenfalls eine allfällig vorhandene zentrale Bus-Speisung 8. Im letzteren Fall sehen die einzelnen Busteilnehmer einen intakten Bus 1, über den sie miteinander kommunizieren können. Der Bus 1 verhält sich wie ein Bus mit vorgeschriebener und vorhandener zentralen Bus-Speisung. Andererseits ist ohne zentrale Bus-Speisung 8 vorläufig keine Kommunikation über den Bus 1 möglich. Im letzteren Fall wird ein Busteilnehmer nach dem anderen, welcher zufällig zu senden beginnt, seine dezentrale Bus-Speisung 10 einschalten, wenn die Bedingung $I_{Bus} < I_{Bus,Max} - I_H$ erfüllt ist. Schliesslich ist dann die Kommunikation über den dezentral gespeisten Bus 1 möglich.

Anlässlich einer Inbetriebsetzung sind somit folgende Verfahrensschritte erforderlich:

- Zu Beginn liefert kein Busteilnehmer 2 bis 5 einen Bus-Strom, ausser eine allfällige vorhandene zentrale Bus-Speisung 8.
- Bei einer vorhandenen zentralen Bus-Speisung 8 sehen die einzelnen Busteilnehmer 2 bis 7 einen intakten Bus, über welchen die Busteilnehmer 2 bis 7 korrekt miteinander kommunizieren können. Der Bus 1 verhält sich in diesem Fall wie ein mit ausschliesslich zentraler Bus-Speisung versehener Bus.
- Andererseits ist ohne zentrale Bus-Speisung 8 vorerst keine Kommunikation über den Bus 1 möglich.
- Solange im letzteren Fall der ermittelte Bus-Strom $I_{Bus}$ zu niedrig ist, d. h. wenn:

$$I_{Bus} < I_{Bus,Max} - I_H$$

  wird ein zufälliger Busteilnehmer 2 bis 5 nach dem anderen, der gerade senden will, seine eigene dezentrale Bus-Speisung 10 einschalten.
- Schliesslich ist auch bei einer abwesenden zentralen Bus-Speisung 8 eine Kommunikation über den dann rein dezentral gespeisten Bus 1 möglich.

Eine Inbetriebsetzung kann wahlweise mit einem sogenannten "Freezing" abgeschlossen werden. "Freezing" heisst Einfrieren und bewirkt eine quasi Fixierung des aktuellen Bus-Zustandes im Moment der Ausführung des "Freeze"-Befehls. Konkret bewirkt der "Freeze"-Befehl folgendes:

   1.) Alle Busteilnehmer 2 bis 5, welche in diesem Augenblick gerade ihre eigene dezentrale Bus-Speisung 10 ausgeschaltet haben, schalten ihre ursprüngliche Möglichkeit für ein eventuelles Speisen des Busses 1 aus. Diese Bus-Teilnehmer 2 bis 5 werden dann in Zukunft den Bus 1 in keinem Fall mehr speisen können, auch wenn sie sogar beim Senden, wenn sie den Bus-Strom messen, einen zu kleinen Bus-Strom feststellen ($I_{Bus} < I_{Bus,Max} - I_H$).

   2.) Alle Busteilnehmer 2 bis 5, welche in diesem Augenblick gerade ihre eigene dezentrale Bus-Speisung 10 eingeschaltet haben, verändern ihr Verhalten nicht (Der "Freeze"-Befehl bewirkt nichts). Diese Bus-Teilnehmer 2 bis 5 werden dann auch in Zukunft, genau gleich wie vor dem "Freeze"-Befehl, ihre eigene Bus-Speisung 10 entsprechend der gerade auf dem Bus 1 vorhandenen Stromsituation aus- oder einschalten.

   3.) Eine allenfalls vorhandene zentrale Bus-Speisung 8 und alle Busteilnehmer 6 und 7 sind vom "Freeze"-Befehl nicht betroffen.

Der "Freeze"-Befehl schliesst Veränderungen der Bus-Einspeisetopologie im späteren Betrieb praktisch aus. Das ganze Bussystem funktioniert in einem quasi fixierten Zustand, in welchem seine Funktionstüchtigkeit beim Abschluss der Installation überprüft werden kann. Sinnvollerweise soll bei der Ausführung des "Freeze"-Befehls gerade eine optimale Bus-Einspeisetopologie vorhanden sein.

Der "Freeze"-Befehl besitzt vorzugsweise die Gestalt eines Telegramms, welches über den ja funktionstüchtigen Bus an alle Busteilnehmer 2 bis 5 gesendet wird.

Um die durch den "Freeze"-Befehl und den eingefrorenen Bus-Zustand dem Bus-System auferlegten Einschränkungen wieder aufzuheben, ist ein weiterer Befehl, ein "Unfreeze"-Befehl vorgesehen. Er bewirkt folgendes:

   1.) Diejenigen Busteilnehmer 2 bis 5, welche ihre Möglichkeit für ein eventuelles Speisen des Busses 1 durch einen früher erhaltenen "Freeze"-Befehl verloren haben, erhalten mit dem "Unfreeze"-Befehl diese Möglichkeit wieder zurück.

   2.) Alle anderen Busteilnehmer 2 bis 5 werden vom "Unfreeze"-Befehl nicht beeinflusst, d.h. sie behalten die Möglichkeit für ein eventuelles Speisen des Busses 1.

   3.) Eine allenfalls vorhandene zentrale Bus-Speisung 8 und alle Busteilnehmer 6 und 7 sind vom "Unfreeze"-Befehl nicht betroffen.

Der "Unfreeze"-Befehl ist vorallem bei Bus-Umbauten sehr nützlich. Auch der "Unfreeze"-Befehl besitzt vorzugsweise die Gestalt eines Telegramms, welches über den Bus 1 an alle Busteilnehmer 2 bis 5 gesendet wird.

In gewissen Fällen kann es auch sinnvoll sein, dass der "Freeze"- oder auch der "Unfreeze"-Befehl selektiv nur für einzelne Busteilnehmer 2 bis 5 wirksam sind. Alle anderen Busteilnehmer 2 bis 5 erhalten dann den betreffenden Befehl nicht.

Der maximale Busstromwert $I_{Bus,Max}$ ist vorzugsweise innerhalb gewisser Grenzen benutzerabhängig parametrierbar. Ein dezentral gespeistes System kann dann an verschiedene Kundenbedürfnisse optimal angepasst werden: Wird z.B. $I_{Bus,Max}$ erhöht, dann wird sich die gesamte Busausdehnung vergrössern. Andererseits kann dadurch aber auch der maximal zulässige Abstand zweier Busteilnehmer eingeschränkt werden. Der Wert von $I_{Bus,Max}$ bestimmt auch die maximale Leistung, welche vom dezentral gespeisten Bus 1 bezogen werden kann.

**Patentansprüche**

1. Verfahren zum dezentralen Speisen eines Busses (1), an dem Busteilnehmer (2 bis 7) angeschlossen sind, **dadurch gekennzeichnet, dass** mindestens ein Teil der Busteilnehmer (2, 3, 4, 5) zum Speisen des Busses (1) je eine Bus-Speisung (10) aufweist und selber entscheidet, ob in Abhängigkeit einer auf dem Bus (1) vorhandenen Stromsituation ihre Bus-Speisung (10) den Bus (1) speist oder nicht speist.

2. Verfahren nach Anspruch 1, **dadurch gekennzeichnet, dass** in einem sendenden Busteilnehmer (2, 3, 4,5) ein Stromwert ($I_{Bus}$) eines über den Bus (1) fliessenden Stromes ermittelt wird, dass die eigene Bus-Speisung (10) des sendenden Busteilnehmers (2, 3, 4, 5), falls sie den Bus (1) speist, abgeschaltet wird, wenn der ermittelte Stromwert ($I_{Bus}$) grösser als ein oberer Grenzwert ($I_{Bus,Max}$ + $I_H$) ist, dass die eigene Bus-Speisung (10) des sendenden Busteilnehmers (2, 3, 4, 5), falls sie den Bus (1) noch nicht speist, zugeschaltet wird, wenn der ermittelte Stromwert ($I_{Bus}$) kleiner als ein unterer Grenzwert ($I_{Bus,Max}$ - $I_H$) ist, und dass die Bus-Speisung (10) innerhalb des sendenden Busteilnehmers (2, 3, 4, 5) unverändert bleibt, wenn der ermittelte Stromwert ($I_{Bus}$) zwischen dem oberen und unteren Grenzwert ($I_{Bus,Max}$ + $I_H$ und $I_{Bus,Max}$ - $I_H$) liegt.

3. Verfahren nach Anspruch 2, **dadurch gekennzeichnet, dass** der obere Grenzwert ($I_{Bus,Max}$ + $I_H$) ein um einen Hysteresewert ($I_H$) erhöhter und der untere Grenzwert ein um den Hysteresewert ($I_H$) erniedrigter maximaler Busstromwert ($I_{Bus,Max}$) ist.

4. Verfahren nach Anspruch 3, **dadurch gekennzeichnet, dass** der maximale Bustromwert ($I_{Bus,Max}$) benutzerabhängig parametrierbar ist.

5. Verfahren nach einem der Ansprüche 2 bis 4, **dadurch gekennzeichnet, dass** solange der ermittelte Stromwert ($I_{Bus}$) grösser als der obere Grenzwert ($I_{Bus,Max}$ + $I_H$) ist, die Bus-Speisungen (10) von zeitlich nachfolgend zufällig sendenden Busteilnehmern (2, 3, 4, 5) eine nach der anderen den Bus (1) nicht mehr speisen, bis dass der ermittelte Stromwert ($I_{Bus}$) kleiner als der obere Grenzwert ($I_{Bus,Max}$ + $I_H$) wird.

6. Verfahren nach einem der Ansprüche 2 bis 5, **dadurch gekennzeichnet, dass** bei einem Senden im sendenden Busteilnehmer (2, 3, 4, 5) zwei Leiter (1a, 1b) des Busses (1) annähernd kurzgeschlossen werden.

7. Verfahren nach einem der Ansprüche 1 bis 6, **dadurch gekennzeichnet, dass** ein aktueller Bus-Zustand mittels eines Befehls ("Freeze") eingefroren wird, wodurch alle Busteilnehmer (2 bis 5), welche in diesem Augenblick gerade ihre eigene dezentrale Bus-Speisung (10) ausgeschaltet haben, ihre ursprüngliche Möglichkeit für ein eventuelles Speisen des Busses (1) ausschalten, während alle Busteilnehmer (2 bis 5), welche in diesem Augenblick gerade ihre eigene dezentrale Bus-Speisung (10) eingeschaltet haben, ihr Verhalten nicht verändern.

8. Verfahren nach Anspruch 7, **dadurch gekennzeichnet, dass** mittels eines weiteren Befehls ("Unfreeze") die durch den eingefrorenen Bus-Zustand auferlegten Einschränkungen wieder aufgehoben werden und diejenigen Busteilnehmer (2 bis 5), welche ihre Möglichkeit für ein eventuelles Speisen des Busses (1) verloren haben, diese Möglichkeit wieder zurück erhalten.

9. Verfahren nach Anspruch 7 oder 8, **dadurch gekennzeichnet, dass** der oder die Befehle die Gestalt eines Telegramms besitzen, welches über den Bus (1) an alle Busteilnehmer (2 bis 5) gesendet wird.

10. Verfahren nach einem der Ansprüche 7 bis 9, **dadurch gekennzeichnet, dass** der oder die Befehle selektiv nur für einzelne Busteilnehmer (2 bis 5) wirksam sind.

11. Anordnung zur Durchführung des Verfahrens nach einem der Ansprüche 1 bis 10, **dadurch gekennzeichnet, dass** mindestens ein Teil der Busteilnehmer (2, 3, 4, 5) jeweils eine Entscheidungs-Einrichtung (19) enthält zum eigenständigen Ein- oder Abschalten ihrer Bus-Speisung (10) in Abhängigkeit der auf dem Bus (1) vorhandenen Stromsituation.

12. Anordnung nach Anspruch 11, **dadurch gekennzeichnet, dass** die betreffenden Busteilnehmer eine Strom-Messeinrichtung (14) enthalten zum jeweiligen Messen bei einem sendenden Busteilnehmer (2, 3, 4, 5) eines über den Bus (1) fliessenden Stromes sowie, dass sie eine Schalteinrichtung aufweisen zum eigenständigen Ein/Ab-Schalten ihrer Bus-Speisung (10) in Abhängikeit eines von ihrer Entscheidungs-Einrichtung (19) erzeugten Signals, wobei ein Ausgang der Strom-Messeinrichtung (14) über die Entscheidungs-Einrichtung (19) mit einem Steuereingang der Schalteinrichtung verbunden ist.

13. Anordnung nach Anspruch 11 oder 12, **dadurch gekennzeichnet, dass** die betreffenden Busteilnehmer (2, 3, 4, 5) bezüglich ihrer Bus-Schnittstelle identisch aufgebaut sind.

14. Anordnung nach einem der Ansprüche 11 bis 13, **dadurch gekennzeichnet, dass** am Bus (1) fakultativ eine zentrale Bus-Speisung (8) angeschlossen ist zwecks zentraler Speisung des Busses (1).

15. Anordnung nach einem der Ansprüche 11 bis 14, **dadurch gekennzeichnet, dass** die Entscheidungs-Einrichtung (19) einen Mikrocomputer enthält.

**Claims**

1. Method for the decentralized supply of a bus (1 ) to which bus participants (2 to 7) are connected, **characterized in that** at least some of the bus participants (2, 3, 4, 5) each have a bus supply (10) to supply the bus (1) and itself decide whether their bus supply (10) does or does not supply the bus (1 ) depending on the current situation prevailing on the bus (1)

2. Method according to claim 1, **characterized in that**, in a transmitting bus participant (2, 3, 4, 5), a current value ($I_{Bus}$) of a current flowing over the bus (1) is ascertained, **in that** if the transmitting bus participant (2, 3, 4, 5) is supplying the bus, its own bus supply (10) is switched off if the ascertained current value ($I_{Bus}$) is greater than the upper limit value ($I_{Bus,Max}$ + $I_H$), **in that** if the transmitting bus participant (2, 3, 4, 5) is not yet supplying the bus, its own bus supply (10), in addition to the bus supplies of other bus participants already supplying the bus, is connected to the bus if the ascertained current value ($I_{Bus}$) is smaller than a lower limit value ($I_{Bus,Max}$ - $I_H$), and **in that** the bus supply (10) inside the transmitting bus participant (2, 3, 4, 5) remains unchanged if the established current value ($I_{Bus}$) lies between the upper and lower limit values ($I_{Bus,Max}$ + $I_H$ and $I_{Bus,Max}$ - $I_H$).

3. Method according to claim 2, **characterized in that** the upper limit value ($I_{Bus,Max}$ + $I_H$) and the lower limit value are a maximum bus current value ($I_{Bus,Max}$) respectively increased by half a hysteresis value ($I_H$) and reduced by half the hysteresis value ($I_H$).

4. Method according to claim 3, **characterized in that** the maximum bus current value ($I_{Bus,Max}$) is parameterizable depending on the user.

5. Method according to one of claims 2 to 4, **characterized in that**, as long as the established current value ($I_{Bus}$) is greater than the upper limit value ($I_{Bus,Max}$ + $I_H$), the bus supplies (10) of bus participants (2, 3, 4, 5) transmitting in chronological sequence and by chance one after another no longer supply the bus (1) until the established current value ($I_{Bus}$) is smaller than the upper limit value ($I_{Bus,Max}$ + $I_H$).

6. Method according to one of claims 2 to 5, **characterized in that** during a transmission, in the transmitting bus participant (2, 3, 4, 5) two conductors (1a, 1 b) of the bus (1) are almost short-circuited.

7. Method according to one of claims 1 to 6, **characterized in that** a current bus state is frozen in by means of a command ("freeze"), as a result of which all the bus participants (2 to 5) which have just switched off their own decentralized bus supply (10) at this moment rule out their original option of a possible supply of the bus (1 ), whilst all the bus participants (2 to 5) which have just switched on their own decentralized bus supply (10) at this moment do not change their behaviour.

8. Method according to claim 7, **characterized in that**, by means of a further command ("unfreeze"), the restrictions imposed by the frozen bus state are lifted again, and those bus participants (2 to 5) which have lost their option of a possible supply of the bus (1) regain this option again.

9. Method according to claim 7 or 8, **characterized in that** the command or commands have the form of a telegram which is transmitted via the bus (1) to all the bus participants (2 to 5).

10. Method according to one of claims 7 to 9, **characterized in that** the command or commands are selectively effective for individual bus participants (2 to 5) only.

11. Arrangement for carrying out the method according to one of claims 1 to 10, **characterized in that** at least some of the bus participants (2, 3, 4, 5) each contain a decision apparatus (19) for the independent switching on or off of their bus supply (10) depending on the current situation prevailing on the bus (1).

**12.** Arrangement according to claim 11, **characterized in that** the bus participants concerned contain a current-measuring apparatus (14) for the respective measurement, in the case of a transmitting bus participant (2, 3, 4, 5) of a current flowing over the bus (1 ), and **in that** they have a switching apparatus for the independent switching on/off of their bus supply (10) depending on a signal generated by their decision apparatus (19), an output of the current-measuring apparatus (14) being connected via the decision apparatus (19) to a control input of the switching apparatus.

**13.** Arrangement according to claim 11 or 12, **characterized in that** the bus participants (2, 3, 4, 5) concerned are constructed identically with regard to their bus interface.

**14.** Arrangement according to one of claims 11 to 13, **characterized in that** a centralized bus supply (8) is optionally connected to the bus (1) for the purpose of centrally supplying the bus (1).

**15.** Arrangement according to one of claims 11 to 14, **characterized in that** the decision apparatus (19) contains a microcomputer.

**Revendications**

**1.** Procédé d'alimentation décentralisée d'un bus (1) auquel sont reliés des utilisateurs de bus (2 à 7), **caractérisé en ce qu'**au moins une partie des utilisateurs du bus (2, 3, 4, 5) comportent chacun une alimentation de bus (10) pour alimenter le bus (1) et décident eux-même, si, en fonction d'une situation du courant sur le bus (1), leur alimentation de bus (10) alimente ou non le bus (1).

**2.** Procédé selon la revendication 1, **caractérisé en ce que**, dans un utilisateur de bus en émission (2, 3, 4, 5), une valeur ($I_{Bus}$) d'un courant s'écoulant dans le bus (1) est déterminée, **en ce que** la propre alimentation de bus (10) de l'utilisateur de bus en émission (2, 3, 4, 5), au cas où elle alimente le bus (1), est arrêtée lorsque la valeur de courant (IBus) déterminée est supérieure à une valeur limite supérieure ($I_{Bus,Max} + I_H$), **en ce que** la propre alimentation de bus (10) de l'utilisateur de bus en émission (2, 3, 4, 5), au cas où elle n'alimente pas encore le bus (1), est mise en marche lorsque la valeur de courant ($I_{Bus}$) déterminée est inférieure à une valeur limite inférieure ($I_{Bus,Max} - I_H$) et **en ce que** la l'alimentation de bus (10) reste inchangée à l'intérieur de l'utilisateur de bus en émission (2, 3, 4, 5) lorsque la valeur de courant ($I_{Bus}$) déterminée est entre la valeur limite supérieure et la valeur limite inférieure ($I_{Bus,Max} + I_H$ et $I_{Bus,Max} - I_H$).

**3.** Procédé selon la revendication 2, **caractérisé en ce que** la valeur limite supérieure ($I_{Bus,Max} + I_H$) est une valeur maximale du courant de bus ($I_{Bus,Max}$) augmentée d'une valeur d'hystérésis ($I_H$) et la valeur limite inférieure est une valeur maximale du courant de bus ($I_{Bus,Max}$) diminuée d'une valeur d'hystérésis ($I_H$).

**4.** Procédé selon la revendication 3, **caractérisé en ce que** la valeur maximale du courant de bus ($I_{Bus,Max}$) peut être paramétrée en fonction de l'utilisateur.

**5.** Procédé selon l'une des revendications 2 à 4, **caractérisé en ce que**, tant que la valeur de courant ($I_{Bus}$) déterminée est supérieure à la valeur limite supérieure ($I_{Bus,Max} + I_H$), les alimentation de bus (10) d'utilisateurs du bus se suivant de manière chronologique et en émission de manière aléatoire (2, 3, 4, 5) n' alimentent plus le bus (1) l'un après l'autre jusqu'à ce que la valeur de courant (IBus) soit inférieure à la valeur limite supérieure ($I_{Bus,Max} + I_H$).

**6.** Procédé selon l'une des revendications 2 à 5, **caractérisé en ce que**, lors d'une émission dans l'utilisateur du bus en émission (2, 3, 4, 5), deux conducteurs (la, 1b) du bus (1) sont court-circuités de manière approximative.

**7.** Procédé selon l'une des revendications 1 à 6, **caractérisé en ce qu'**un état de bus actuel est gelé à l'aide d'une commande (« freeze »), ce qui fait que tous les utilisateurs du bus (2 à 5), qui ont à cet instant arrêté leur propre alimentation de bus décentralisée (10), suppriment leur possibilité initiale pour une éventuelle alimentation du bus (1), tandis que tous les utilisateurs du bus (2 à 5) qui, à cet instant, ont mis en marche leur propre alimentation de bus décentralisée (10), ne modifient pas leur comportement.

**8.** Procédé selon la revendication 7, **caractérisé en ce que**, à l'aide d'une autre commande (« unfreeze ») les limitations imposées par l'état gelé du bus sont à nouveau supprimées et les utilisateurs du bus (2 à 5) qui ont perdu leur possibilité d'une éventuelle alimentation du bus (1), obtiennent à nouveau cette possibilité.

**9.** Procédé selon la revendications 7 ou 8, **caractérisé en ce que** la ou les commandes ont la forme d'un télégramme qui est envoyé à tous les utilisateurs du bus (2 à 5 ) par l'intermédiaire du bus (1).

**10.** Procédé selon l'une des revendications 7 à 9, **caractérisé en ce que** la ou les commandes sont actives sélectivement pour différents utilisateurs du bus (2 à 5).

11. Dispositif pour la réalisation du procédé selon l'une des revendications 1 à 10, **caractérisé en ce qu'**au moins une partie des utilisateurs du bus (2, 3, 4, 5) comprend chacun un dispositif de décision (19) pou la mise en marche ou l'arrêt automatique de son alimentation de bus (10) en fonction de la situation du courant sur le bus (1).

12. Dispositif selon la revendication 11, **caractérisé en ce que** les utilisateurs du bus concernés comprennent un dispositif de mesure du courant (14) pour mesurer, dans un utilisateur de bus en émission (2, 3, 4, 5), un courant passant dans le bus (1), **en ce qu'**ils comportent un dispositif de commutation pour la mise en marche ou l'arrêt automatique de leur alimentation de bus (10) en fonction du signal généré par leur dispositif de décision (19), moyennant quoi une sortie du dispositif de mesure du courant (14) est relié à une entrée de commande du dispositif de commutation par l'intermédiaire du dispositif de décision (19).

13. Dispositif selon la revendication 11 ou 12, **caractérisé en ce que** les utilisateurs du bus concernés (2, 3, 4, 5) sont conçus de manière identique en ce qui concerne leur interface de bus.

14. Dispositif selon l'une des revendications 11 à 13, **caractérisé en ce que**, sur le bus (1) une alimentation de bus (8) est raccordée, de manière facultative, pour l'alimentation centralisée du bus (1).

15. Dispositif selon l'une des revendications 11 à 14, **caractérisé en ce que** le dispositif de décision (19) comprend un micro-ordinateur.

## Fig. 1

## Fig.2